# EUROPÄISCHE PATENTANMELDUNG

(11) **EP 2 602 584 A1**
(43) Veröffentlichungstag der Anmeldung: **12.06.2013**
(21) Anmeldenummer: 11191963.5
(22) Anmeldetag: 05.12.2011
(51) Int. Cl.: G01B 11/24, G01S 17/46

(54) **Optisches Messsystem**

(71) Anmelder: Alicona Imaging GmbH, 8074 Grambach bei Graz (AT)
(72) Erfinder: Prantl, Manfred, 8044 Graz (AT); Scherer, Stefan, 8010 Graz (AT); Helmli, Franz, 8505 St. Nikolai/Sausal (AT)
(74) Vertreter: Schwarz & Partner

(57) **Zusammenfassung**

Ein optisches Messsystem (1, 1', 1", 1"'), insbesondere ein berührungsloses optisches Oberflächenmesssystem, ist mit einer Bildverarbeitungseinheit (2) und einer abbildenden Optik (3) ausgestattet und weist eine Lichtquelle (4) auf, die eine visuelle Markierung (5a, 5b, 5c, 5d) in ein Messfeld (7) der abbildenden Optik (3) projiziert.

## Beschreibung

Die Erfindung betrifft ein optisches Messsystem, insbesondere berührungsloses optisches Oberflächenmesssystem, mit einer Bildverarbeitungseinheit und einer abbildenden Optik.

Bei optischen Messsystemen, insbesondere berührungslosen Oberflächenmesssystemen, wie z.B. optischen 3D-Messsystemen (im Speziellen flächenhaft messenden Messsystemen) ist in der Regel ein bestimmter Bereich auf der Oberfläche des Prüflings von Interesse. Im Gegensatz zu taktilen Messsystemen, bei denen über einen Messtaster die aktuelle Messposition des Messsystems vom Bediener klar zu erkennen ist, ist das bei berührungslosen Messsystemen nicht ohne weiteres möglich. Das Ausrichten von Messsystem und Prüfling zueinander gestaltet sich sehr schwierig.

Besonders schwer zum Tragen kommt dieses Problem, wenn das Messsystem nicht mit sichtbarem Licht zur Beleuchtung des Prüflings arbeitet oder die verwendete Lichtquelle die Oberfläche großflächig diffus beleuchtet, so dass kein Zusammenhang zwischen beleuchtendem Leuchtfleck und dem Messfeld auf dem Prüfling erkennbar ist.

Einige Messsysteme des Standes der Technik verfügen zur Positionierung der Messsensorik über eine dedizierte Positioniersensorik. Dies kann z.B. eine kalibrierte makroskopische Videokamera sein. Über deren Bild, das der Bediener auf einem Videobildschirm sehen kann, kann z.B. mittels eines dem Bild überlagerten Fadenkreuzes die Messposition anvisiert werden.

Das Problem bei dieser bekannten Lösung ist jedoch, dass der Bediener während der Positionierung des Messsystems nicht auf den Prüfling blicken kann. Eine Kollision zwischen Prüfling und Messsystem ist auf Grund der - durch das zweidimensionale Videobild fehlenden räumlichen Wahrnehmung - nicht auszuschließen. Um eine möglichst genaue Ausrichtung in allen Raumrichtungen zu gewährleisten müsste man mehrere Kameras mit unterschiedlichen Perspektiven nutzen.

Die Aufgabe der vorliegenden Erfindung besteht daher in der Überwindung der Nachteile des Standes der Technik. Insbesondere liegt die Aufgabe der Erfindung darin, ein optisches Messsystem bereitzustellen, bei dem die Bedienperson bei der relativen Positionierung zwischen dem Messsystem und einem Prüfling durch berührungslos arbeitende Mittel unterstützt wird.

Die vorliegende Erfindung löst diese Aufgabe durch Bereitstellen eines optischen Messsystems, insbesondere eines berührungslosen optischen Oberflächenmesssystems, mit den Merkmalen des Anspruchs 1.

Vorteilhafte Ausgestaltungen der Erfindung sind in den Unteransprüchen und der Beschreibung dargelegt.

Der Begriff "berührungsloses optisches Messsystem" ist so zu verstehen, dass ein Prüfling wie z.B. ein Werkstück vermessen wird, ohne dass dieser Prüfling mit Sonden oder dergleichen berührt werden muss. Vielmehr erfolgt eine optische Betrachtung (Bildaufnahme) und Vermessung mit Bildverarbeitungsmitteln.

Das erfindungsgemäße optische Messsystem zur Vermessung eines Prüflings umfasst eine Bildverarbeitungseinheit und eine abbildenden Optik. Es ist weiters eine Lichtquelle vorgesehen, die - gegebenenfalls durch optische Einrichtungen, wie z.B. Linsen oder Spiegel, eine visuelle Markierung in ein Messfeld der abbildenden Optik projiziert. Diese visuelle Markierung ist idealerweise so beschaffen, dass sie sowohl eine laterale als auch eine vertikale Ausrichtung von Prüfling und Messsystem zueinander erlaubt. Vorzugsweise ist die Projektion der visuellen Markierung auf das Zentrum des Messfeldes gerichtet oder definiert den Umriss des Messfeldes.

In einer bevorzugten Ausführungsform der Erfindung sendet die Lichtquelle, insbesondere ein Laser oder eine Leuchtdiode, einen ersten schmalen Lichtstrahl als visuelle Markierung aus, der parallel oder koaxial zur optischen Achse der abbildenden Optik in das Messfeld gerichtet ist. Sowohl Laser als auch Leuchtdioden stellen gut lokalisierte Lichtquelle dar. Der von diesen Lichtquellen ausgestrahlte Lichtstrahl weist, insbesondere im Fall des Lasers, eine hohe Parallelität auf. Der Lichtstrahl wird vorzugsweise zumindest teilweise koaxial in den Strahlengang des Messsystems eingekoppelt, so dass er das Messsystem parallel zu dessen optischer Achse oder mit ihr zusammenfallend in Richtung des Prüflings verlässt. Der vom Lichtstrahl auf die Oberfläche des Prüflings projizierte Leuchtfleck stellt die visuelle Markierung dar, die im Zentrum des Messfelds liegt bzw. in einem vordefinierten Abstand vom Zentrum des Messfelds versetzt ist.

Um zusätzlich eine relative vertikale Positionierung zwischen Messsystem und Prüfling zu erlauben, ist in einer Fortbildung der Erfindung vorgesehen, dass mit einer Zusatzlichtquelle ein zweiter schmaler Lichtstrahl erzeugt und schräg zum ersten Lichtstrahl in das Messfeld projiziert wird, wobei der erste und der zweite Lichtstrahl so ausgerichtet sind, dass sie einander in der Brennebene der abbildenden Optik schneiden. Man muss das Messsystem und den Prüfling also nur so zueinander ausrichten, dass beide Leuchtflecken der beiden Lichtstrahlen auf der Oberfläche des Prüflings in einem Punkt zusammenfallen. Um eine leichte Unterscheidung der beiden Lichtstrahlen zu ermöglichen, können unterschiedlich farbige Lichtquellen bzw. Lichtstrahlen (z.B. rot und grün) verwendet werden.

In einer alternativen Ausführungsform der Erfindung sendet die Lichtquelle, insbesondere ein Laser oder eine Leuchtdiode, einen konvergenten Lichtstrahl als visuelle Markierung aus, der parallel oder koaxial zur optischen Achse der abbildenden Optik in das Messfeld gerichtet ist und in der Brennebene der abbildenden Optik maximal fokussiert ist. Bei einer Abstandsänderung zwischen dem Prüfling und der abbildenden Optik des Messsystems wird die vom Lichtstrahl in Form eines Leuchtflecks auf den Prüfling projizierte visuelle Markierung daher ihre minimale Ausdehnung dann erreichen, wenn sich der Prüfling bzw. die vom Lichtstrahl angestrahlte Oberfläche des Prüflings im Fokus der abbildenden Optik befindet. Die Größe der visuellen Markierung kann z.B. über eine im Messsystem verbaute Kamera oder auch über eine externe Kamera verfolgt werden. Der Benutzer kann somit einfach über das auf einem Monitor dargestellte Kamerabild mitverfolgen, ob sich der Prüfling im Fokus befindet oder nicht. Das setzt natürlich voraus, dass die Lichtquelle sichtbares Licht emittiert. Alternativ kann das Kamerabild auch durch eine Bildverarbeitungssoftware ausgewertet und mit Hilfe der Bildverarbeitungssoftware ermittelt werden, ob der Prüfling den Fokusbereich des optischen Messsystems erreicht hat. Dies kann dann z.B. über ein Haltesignal an eine Prüflings-Positioniermechanik des Messsystems oder eine Messsystem-Positioniermechanik weitergemeldet werden, um den Positioniervorgang zu beenden. Auch die Richtung, in die man die Positioniermechanik bewegen muss, um den Fokusbereich zu erreichen, kann leicht ermittelt werden. Wenn man z.B. das Messsystem auf die Probe zu bewegt und die Größe des projizierten Leuchtflecks abnimmt, so stimmt die Bewegungsrichtung hin zum Fokusbereich, andernfalls muss die Richtung umgekehrt werden.

Wenn die Lichtquelle, insbesondere ein Laser oder eine Leuchtdiode, einen Lichtstrahl als visuelle Markierung aussendet, der schräg zur optischen Achse der abbildenden Optik in das Messfeld gerichtet ist und vorzugsweise in der Brennebene der abbildenden Optik maximal fokussiert ist, was z.B. durch eine entsprechende Justierung der Einkopplungsrichtung des Lichtstrahls in den koaxialen Strahlengang der abbildenden Optik leicht möglich ist, so kann aus dem Versatz des Schwerpunktes des Leuchtflecks, d.h. der visuellen Markierung, zum Hauptpunkt des Kamerabildes (das ist jener Punkt, wo ein Objektpunkt, der auf der optischen Achse liegt, im Kamerabild abgebildet wird) der Abstand zwischen der Fokusebene der abbildenden Optik und dem Prüfling berechnet werden. Damit kann die Positionierung des Prüflings in der Fokusebene des Messsystems noch gezielter erfolgen.

Für das bloße Anvisieren der Messposition auf dem Prüfling ist ein koaxialer Laserstrahl natürlich ausreichend.

In einer weiteren Ausführungsform der Erfindung ist vorgesehen, dass die Lichtquelle einen intensitätsmodulierten Lichtstrahl als visuelle Markierung aussendet, der ein Lichtmuster in das Messfeld projiziert. Die visuelle Markierung kann beispielsweise die Form der Projektion einer binären Maske aufweisen. Zum Beispiel wird mit Hilfe der Lichtquelle eine binäre Chrommaske auf einem Glassubstrat - ähnlich einem Dia - von hinten durchleuchtet. Die so entstehende Intensitätsmodulation wird mit Hilfe einer geeigneten Optik auf die Oberfläche des Prüflings abgebildet. Das so projizierte Lichtmuster markiert das Messfeld des Messsystems. Das Muster ist idealer Weise in der Brennebene des Messsystems scharf abgebildet, so dass auch eine vertikale Ausrichtung durch Fokussieren des Musters auf der Prüflingsoberfläche möglich wird. Auch hier ist wieder eine automatisierte Auswertung dieses Musters über ein Kamerabild realisierbar, mit der eine automatisierte Fokussierung über ein Positioniersystem geschaffen wird.

Die Erfindung wird nun anhand von Ausführungsbeispielen unter Bezugnahme auf die Zeichnungen näher erläutert. In den Zeichnungen zeigen:
Fig. 1 eine schematische Darstellung einer ersten Ausführungsform eines erfindungsgemäßen optischen Messsystems;
Fig. 2 eine schematische Darstellung einer zweiten Ausführungsform eines erfindungsgemäßen optischen Messsystems;
Fig. 3 eine schematische Darstellung einer dritten Ausführungsform eines erfindungsgemäßen optischen Messsystems; und
Fig. 4 eine schematische Darstellung einer vierten Ausführungsform eines erfindungsgemäßen optischen Messsystems.

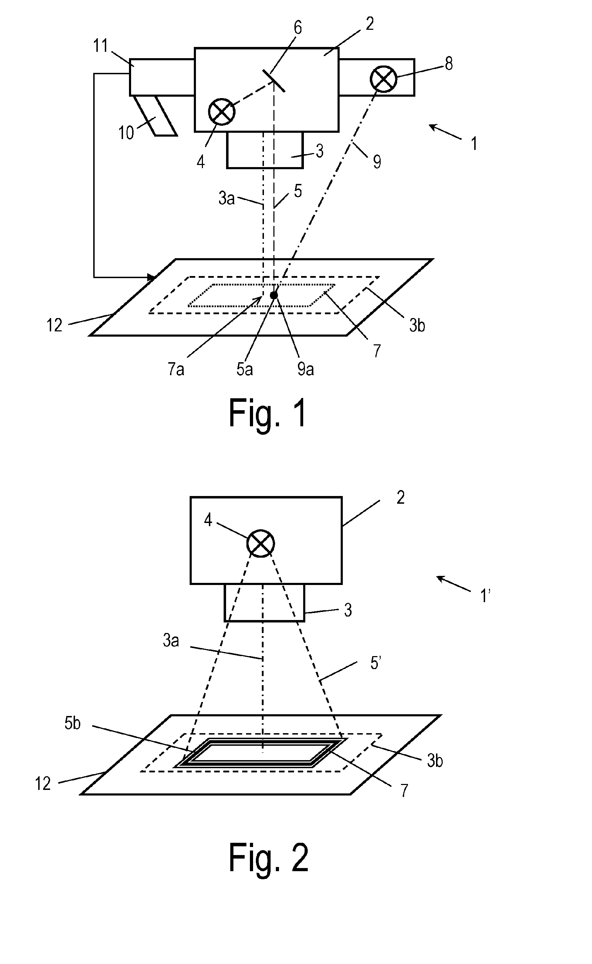

Zunächst wird auf Fig. 1 Bezug genommen, in der schematisch eine erste Ausführungsform eines erfinderischen optischen Messsystems 1, das als berührungsloses optisches Oberflächenmesssystem ausgebildet ist, dargestellt ist. Das Messsystem 1 umfasst eine Bildverarbeitungseinheit 2 und eine abbildende Optik 3. Eine Lichtquelle 4, die z.B. als Laser oder Leuchtdiode ausgebildet ist, erzeugt einen Lichtstrahl 5 von hoher Parallelität, der über einen Spiegel 6 oder eine andere optische Einrichtung in den Strahlengang der abbildenden Optik 3 eingekoppelt wird. Der Lichtstrahl 5 verlässt die abbildende Optik 3 parallel zur optischen Achse 3a der abbildenden Optik 3 gerichtet und projiziert eine - in diesem Beispiel punktförmige - visuelle Markierung 5a in ein Messfeld 7 der abbildenden Optik 3. Da der Lichtstrahl 5 parallel zur optischen Achse 3a der abbildenden Optik 3 gerichtet ist, trifft er etwas seitlich versetzt vom Zentrum 7a des Messfelds 7 auf das Messfeld 7 auf. Es ist jedoch auch möglich, den Lichtstrahl 5 koaxial mit der optischen Achse 3a der abbildenden Optik 3 zu führen, wodurch die vom Lichtstrahl 5 erzeugte visuelle Markierung 5a das Zentrum 7a des Messfeldes 7 markieren würde.

In dieser Ausführungsform des optischen Messsystems 1 ist eine Zusatzlichtquelle 8 vorgesehen, mit der ein zweiter schmaler Lichtstrahl 9 erzeugt wird, der, gegebenenfalls mittels nicht dargestellter optischer Einrichtungen wie Linsen, Spiegel etc. schräg zum ersten Lichtstrahl 5 in das Messfeld 7 projiziert wird, wobei der erste und der zweite Lichtstrahl 5, 9 so ausgerichtet sind, dass sie einander in der Brennebene 3b der abbildenden Optik 3 schneiden. Die Brennebene 3b fällt hier mit der Ebene des Messfeldes 7 zusammen. Somit produziert der zweite Lichtstrahl 9 einen Leuchtfleck 9a, der in der Brennebene 3b mit der visuellen Markierung 5a zusammenfällt. Damit ein Benutzer leichter erkennen kann, welcher Leuchtfleck von welchem Lichtstrahl erzeugt wird, ist es zweckmäßig, wenn der erste Lichtstrahl 5 und der zweite Lichtstrahl 9 unterschiedliche Farben aufweisen.

Die Positionierung des Messfelds 7 bzw. eines nicht dargestellten, im Messfeld 7 angeordneten Prüflings, kann anhand der vorhin beschriebenen Vorgangsweise des in Übereinklang Bringens der beiden Leuchtflecken händisch erfolgen. Sie kann aber auch durch das Vorsehen einer Kamera 10 erleichtert werden, wodurch der Benutzer über das auf einem Monitor dargestellte Kamerabild mitverfolgen kann, ob die beiden Leuchtpunkte 5a, 9a zusammenfallen und damit das Messfeld 7 mit der Brennebene 3b in Einklang gebracht worden ist. In einer fortgeschrittenen Ausführung werden die von der Kamera 10 aufgenommenen Kamerabilder Bildverarbeitungsmitteln 11 zugeführt, die die Kamerabilder in Bezug auf die Größe und/oder Fokussierung und/oder relative Position der visuellen Markierung 5a bezogen auf eine Referenzposition auswerten und vorzugsweise auch gleich eine Prüflings-Positioniereinrichtung 12 gemäß der Auswertung der Kamerabilder ansteuern.

In einer Variante der ersten Ausführungsform der Erfindung wird entweder der erste Lichtstrahl 5 leicht schräg zur optischen Achse 3a der abbildenden Optik 3 gestellt oder nur der zweite Lichtstrahl 9 zur Positionierung des Messfelds 7 bzw. eines darauf angeordneten Prüflings verwendet. Bei dieser Anordnung des Messsystems 1 kann aus dem Versatz des Schwerpunktes der visuellen Markierung 5a oder des Leuchtflecks 9a zum Hauptpunkt des Kamerabildes (das ist jener Punkt, wo ein Objektpunkt, der auf der optischen Achse liegt, im Kamerabild abgebildet wird) der Abstand zwischen der Brennebene 3b der abbildenden Optik und dem Messfeld 7 bzw. dem darauf positionierten Prüfling berechnet werden. Damit kann die Positionierung des Prüflings in der Brennebene 3b des Messsystems 1 noch gezielter erfolgen.

Es sei erwähnt, dass anstelle des Vorsehens einer Zusatzlichtquelle 8 zur Erzeugung des zweiten Lichtstrahls 9 auch die erste Lichtquelle 4, gegebenenfalls mit Lichtleitmitteln, wie Strahlenspaltern und Spiegeln, zur Erzeugung des zweiten Lichtstrahls 9 herangezogen werden könnte.
Fig. 2 zeigt schematisch eine zweite Ausführungsform eines erfinderischen optischen Messsystem 1'. Diese zweite Ausführungsform unterscheidet sich von der ersten Ausführungsform nur insofern, als der von der Lichtquelle 4, z.B. einem Laser oder einer Leuchtdiode, erzeugte Lichtstrahl 5' so geformt ist, dass die von ihm generierte visuelle Markierung 5b den Umriss des Messfeldes 7 anzeigt. Die übrigen Teile der zweiten Ausführungsform des optischen Messsystem 1' entsprechen jenen der ersten Ausführungsform und sind auch mit denselben Bezugszeichen versehen. Zu ihrer Erläuterung sei auf die obige Beschreibung der ersten Ausführungsform des optischen Messsystem 1 verwiesen.

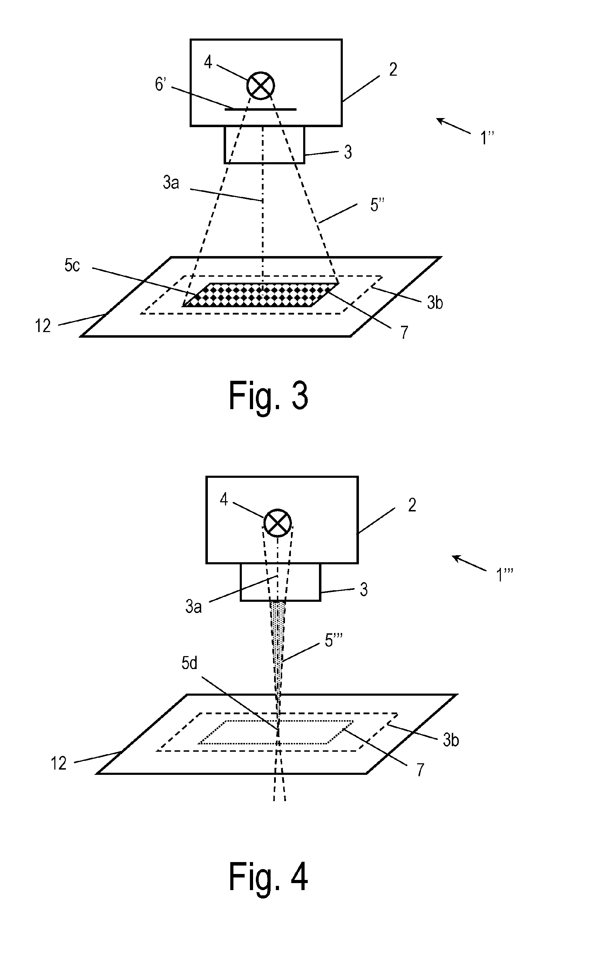

Fig. 3 zeigt schematisch eine dritte Ausführungsform eines erfinderischen optischen Messsystem 1". Diese dritte Ausführungsform unterscheidet sich von der ersten und der zweiten Ausführungsform nur insofern, als der von der Lichtquelle 4 erzeugte Lichtstrahl 5" mit Hilfe einer optischen Maske 6', z.B. einer binären Chrommaske auf einem Glassubstrat, die von der Lichtquelle 4 - ähnlich einem Dia - von hinten durchleuchtet wird, ein Lichtmuster als visuelle Markierung 5c in das Messfeld 7 projiziert. Das so projizierte Lichtmuster markiert für den Benutzer ersichtlich das Messfeld 7 des Messsystems 1". Die visuelle Markierung 5c, d.h. das Lichtmuster ist in der Brennebene 3b des Messsystems 1" scharf abgebildet, so dass auch eine vertikale Ausrichtung durch Fokussieren des Musters auf das Messfeld 7 möglich ist. Auch hier ist - wie in der ersten Ausführungsform des Messsystems leine automatisierte Auswertung dieses Musters über ein Kamerabild realisierbar, mit der eine automatisierte Fokussierung über ein Positioniersystem geschaffen wird. Die übrigen Teile der dritten Ausführungsform des optischen Messsystem 1" entsprechen jenen der ersten Ausführungsform und sind auch mit denselben Bezugszeichen versehen. Zu ihrer Erläuterung sei auf die obige Beschreibung der ersten Ausführungsform des optischen Messsystem 1 verwiesen.
Fig. 4 zeigt schematisch eine vierte Ausführungsform eines erfinderischen optischen Messsystem 1"', bei der die Lichtquelle 4 einen konvergenten Lichtstrahl 5"' aussendet, der als visuelle Markierung 5d in Form eines Leuchtflecks auf das Messfeld 7 projiziert wird. Der Lichtstrahl 5"' ist koaxial zur optischen Achse 3a der abbildenden Optik 3 in das Messfeld 7 gerichtet und ist in der Brennebene 3b der abbildenden Optik 3 maximal fokussiert. In der Darstellung von Fig. 4 fällt die Brennebene 3b mit dem Messfeld 7 zusammen, das heißt, die Einstellung der relativen vertikalen Position zwischen abbildender Optik 3 und Messfeld 7 ist optimal fokussiert. Gleichzeitig weist der Leuchtfleck der visuellen Markierung 5d seinen geringsten Durchmesser auf. Die Größe der visuellen Markierung kann wie in Fig. 1 gezeigt und oben anhand der ersten Ausführungsform beschrieben über eine im Messsystem verbaute Kamera oder auch über eine externe Kamera an einem Monitor verfolgt werden oder mittels einer Bildverarbeitungssoftware ausgewertet werden, die auch eine Prüflings-Positioniermechanik des Messsystems oder eine Messsystem-Positioniermechanik ansteuert. Auch die Richtung, in die man die Positioniermechanik bewegen muss, um den Fokusbereich zu erreichen, kann beim optischen Messsystem 1"' leicht ermittelt werden. Wenn man z.B. das Messsystem 1'" auf das Messfeld 7 zu bewegt und die Größe der visuellen Markierung 5d abnimmt, so stimmt die Bewegungsrichtung hin zum Fokusbereich, andernfalls muss die Richtung umgekehrt werden.

In einer Variante der vierten Ausführungsform des Messsystems 1'" ist der konvergente Lichtstrahl 5"' schräg zur optischen Achse 3a der abbildenden Optik 3 in das Messfeld 7 gerichtet.

Die übrigen Teile der vierten Ausführungsform des optischen Messsystem 1'" entsprechen jenen der ersten Ausführungsform und sind auch mit denselben Bezugszeichen versehen. Zu ihrer Erläuterung sei auf die obige Beschreibung der ersten Ausführungsform des optischen Messsystem 1 verwiesen.

## Patentansprüche

1. Optisches Messsystem (1, 1', 1", 1"'), insbesondere berührungsloses optisches Oberflächenmesssystem, mit einer Bildverarbeitungseinheit (2) und einer abbildenden Optik (3), **gekennzeichnet durch** eine Lichtquelle (4), die eine visuelle Markierung (5a, 5b, 5c, 5d) in ein Messfeld (7) der abbildenden Optik (3) projiziert.

2. Optisches Messsystem nach Anspruch 1, **dadurch gekennzeichnet, dass** die Projektion der visuellen Markierung (5a, 5b, 5c, 5d) auf das Zentrum des Messfeldes gerichtet ist oder den Umriss des Messfeldes anzeigt.

3. Optisches Messsystem nach Anspruch 1 oder 2, **dadurch gekennzeichnet, dass** die Lichtquelle (4), insbesondere ein Laser oder eine Leuchtdiode, einen ersten schmalen Lichtstrahl (5, 5"') zur Erzeugung der visuellen Markierung (5a, 5d) aussendet, der parallel oder koaxial zur optischen Achse (3a) der abbildenden Optik (3) in das Messfeld (7) gerichtet ist.

4. Optisches Messsystem nach Anspruch 3, **dadurch gekennzeichnet, dass** der erste schmale Lichtstrahl (5, 5"') zumindest teilweise in den Strahlengang der abbildenden Optik (3) eingekoppelt wird und durch sie hindurch in das Messfeld (7) projiziert wird.

5. Optisches Messsystem nach Anspruch 3 oder 4, **dadurch gekennzeichnet, dass**, vorzugsweise mit einer Zusatzlichtquelle (8), ein zweiter schmaler Lichtstrahl (9) erzeugt und schräg zum ersten Lichtstrahl (5) in das Messfeld (7) projiziert wird, wobei der erste und der zweite Lichtstrahl (5, 9) so ausgerichtet sind, dass sie einander in der Brennebene (3b) der abbildenden Optik (3) schneiden.

6. Optisches Messsystem nach Anspruch 5, **dadurch gekennzeichnet, dass** der erste und der zweite Lichtstrahl (5, 9) unterschiedliche Farben aufweisen.

7. Optisches Messsystem nach Anspruch 1 oder 2, **dadurch gekennzeichnet, dass** die Lichtquelle (4), insbesondere ein Laser oder eine Leuchtdiode, einen konvergenten Lichtstrahl (5"') zur Erzeugung der visuellen Markierung (5d) aussendet, der parallel oder koaxial zur optischen Achse (3a) der abbildenden Optik (3) in das Messfeld (7) gerichtet ist und in der Brennebene (3b) der abbildenden Optik maximal fokussiert ist.

8. Optisches Messsystem nach Anspruch 1 oder 2, **dadurch gekennzeichnet, dass** die Lichtquelle (4), insbesondere ein Laser oder eine Leuchtdiode, einen konvergenten Lichtstrahl (5"') zur Erzeugung der visuellen Markierung (5d) aussendet, der schräg zur optischen Achse (3a) der abbildenden Optik (3) in das Messfeld (7) gerichtet ist und vorzugsweise in der Brennebene (3b) der abbildenden Optik maximal fokussiert ist.

9. Optisches Messsystem nach Anspruch 1 oder 2, **dadurch gekennzeichnet, dass** die Lichtquelle (4), insbesondere ein Laser oder eine Leuchtdiode, einen intensitätsmodulierten Lichtstrahl (5") zur Erzeugung der visuellen Markierung (5c) aussendet, der ein Lichtmuster in das Messfeld (7) projiziert.

10. Optisches Messsystem nach Anspruch 9, **dadurch gekennzeichnet, dass** das Lichtmuster in der Brennebene (3a) der abbildenden Optik maximal fokussiert ist.

11. Optisches Messsystem nach einem der vorhergehenden Ansprüche, **gekennzeichnet durch** eine Kamera (10), die die visuelle Markierung erfasst.

12. Optisches Messsystem nach Anspruch 11, **gekennzeichnet durch** Bildverarbeitungsmittel (11), die Kamerabilder in Bezug auf die Größe und/oder Fokussierung und/oder relative Position der Lichtmarkierung in Bezug auf eine Referenzposition auswerten.

13. Optisches Messsystem nach Anspruch 12, **dadurch gekennzeichnet, dass** die Bildverarbeitungsmittel (11) eine Prüflings-Positioniereinrichtung (12) oder eine Messsystem-Positioniermechanik gemäß der Auswertung der Kamerabilder ansteuern.

14. Optisches Messsystem nach einem der vorhergehenden Ansprüche, **dadurch gekennzeichnet, dass** die zumindest eine Lichtquelle (4, 8) sichtbares Licht emittiert.
